# FASCICULE DE BREVET EUROPEEN

(11) **EP 1 340 968 B1**
(45) Date de publication et mention de la délivrance du brevet: **18.10.2006**
(21) Numéro de dépôt: 02004476.4
(22) Date de dépôt: 27.02.2002
(51) Int. Cl.: G01G 21/23, G01G 3/12

(54) **Corps d'épreuve et appareil de pesage muni de tels corps d'épreuve**
Biegekraftaufnehmer und damit versehene Wägevorrichtung
Flexion force sensor and balance equipped with such flexion force sensors

(43) Date de publication de la demande: 03.09.2003
(73) Titulaire: S.C.A.I.M.E. S.A., 74105 Annemasse (FR)
(72) Inventeur: Aumard, Jean-Pierre, 74100 Etrembières (FR)
(74) Mandataire: KIRKER & Cie S.A.

(56) Documents cités:
- EP-A- 0 670 480
- EP-A- 0 984 251

## Description

La présente invention a pour objet un corps d'épreuve pour capteur de mesure pour un appareil de pesage et notamment pour des pèse-personnes ainsi qu'un appareil de pesage muni de tels corps d'épreuve. Pour une telle application il est important de pouvoir disposer d'un capteur fiable et bon marché.

Généralement ces appareils de pesage comportent des capteurs de mesure comportant un corps d'épreuve constituant un parallélogramme déformable muni de jauges de contrainte dans ses zones charnières, voir par exemple EP-A2-0 984 251 et EP-A1- 0 670 480. Ceci implique que ces jauges de contrainte résistent aussi bien à une traction qu'à une compression, ce qui nécessite l'utilisation de jauges de contrainte d'un prix élevé.

Il existe des jauges de contrainte très bon marché et pouvant être produites en grande série qui consistent en un substrat en verre fin sur lequel on a déposé des zones métallisées formant les résistances de valeur variable en fonction de la déformation du substrat. L'inconvénient de ces jauges de contrainte réside dans le fait qu'elles résistent mal à une déformation en traction.

L'un des buts de la présente invention est de réaliser un corps d'épreuve pour appareil de pesage permettant de ne soumettre les jauges de contrainte qu'à des déformations et des efforts de compression pour que des jauges de contrainte bon marché, telles que décrites ci-dessus ou de tout autre type de jauges, puissent être utilisées sans nuire à la fiabilité et à la longévité de l'appareil de pesage.

La présente invention a pour objet un corps d'épreuve pour appareil de pesage et un appareil de pesage, notamment un pèse-personne, équipé de tels corps d'épreuve qui se distinguent par les caractéristiques énumérées aux revendications 1 et 3. Les modes particuliers de réalisation de l'invention sont définis dans les revendications dépendantes 2 et 4 à 6.

Le dessin annexé illustre schématiquement et à titre d'exemple une forme d'exécution du corps d'épreuve selon l'invention et son utilisation sur un appareil de pesage.

La figure 1 illustre un schéma d'un appareil de pesage vu de dessus illustrant le positionnement du corps d'épreuve.

La figure 2 est une coupe selon la ligne ll-ll de la figure 1.

La figure 3 est une vue latérale du corps d'épreuve non sollicité.

La figure 4 est une vue latérale du corps d'épreuve, fixé sur le plateau d'un appareil de pesage, en position sollicitée par un poids P appliqué au plateau.

La figure 5 illustre le schéma d'un pont de mesure formé des résistances des jauges de contrainte de l'appareil de pesage.

La figure 6 est une coupe selon la ligne VI-VI de la figure 1.

La figure 7 est une coupe selon la ligne VII-VII de la figure 6.

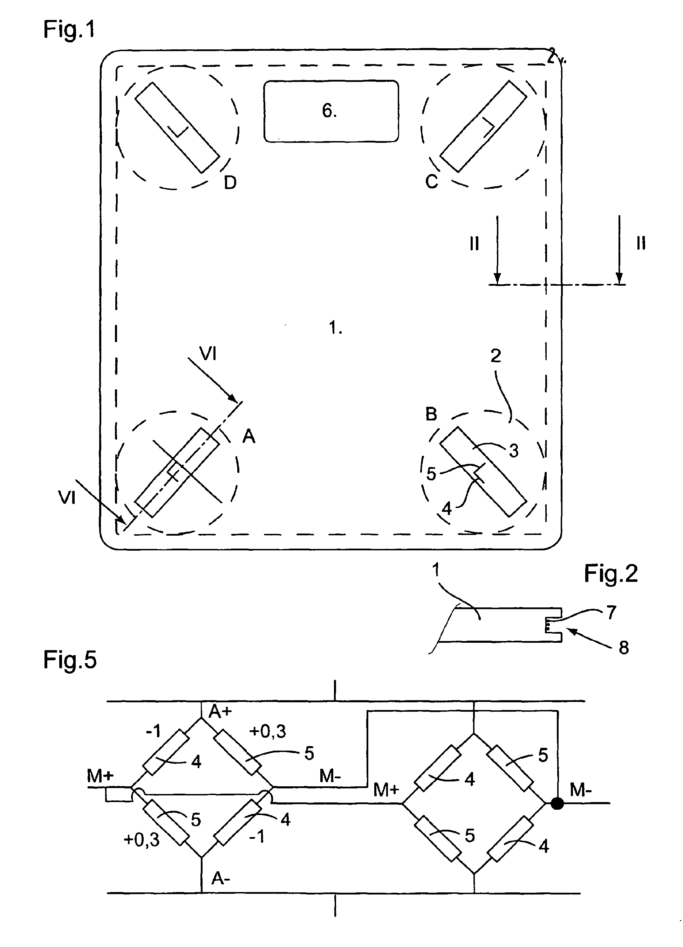

La figure 1 du dessin annexé illustre schématiquement un appareil de pesage, ici un pèse-personne, équipé de quatre corps d'épreuve selon l'invention. Ce pèse-personne se compose d'un plateau 1 muni sur sa surface inférieure de quatre pieds 2, chacun de ces pieds comportant un corps d'épreuve 3 muni d'au moins une mais, de préférence, deux résistances variables 4,5 disposées orthogonalement sur un substrat fixé au corps d'épreuve 3.

Dans l'exemple illustré, les corps d'épreuve 3 sont orientés suivant les diagonales du plateau 1 mais dans d'autres réalisations ils peuvent être orientés par exemple parallèlement chacun à un côté du plateau 1 ou parallèlement à deux côtés de ce plateau 1 se faisant face. De préférence, ces corps d'épreuve sont orientés suivant des directions orthogonales ou parallèles entre eux.

Le plateau 1 est muni sur sa face supérieure d'un affichage 6, par exemple à cristaux liquides, relié aux jauges de contrainte 4,5 du corps d'épreuve 3 par des conducteurs 7 logés dans des rainures 8 du plateau 1 pratiquées dans sa face inférieure et/ou sa périphérie.

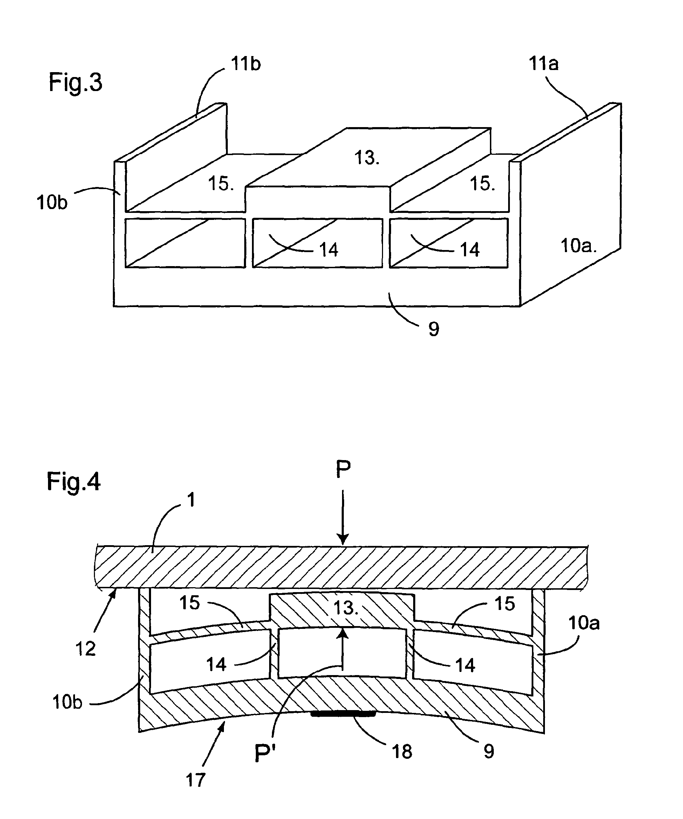

Chaque corps d'épreuve 3 qui, comme on le verra plus loin, est incorporé dans un pied 2 de l'appareil de pesage est formé par un tronçon de profilé illustré à la figure 4.

Ce corps d'épreuve 3 comporte une poutre de mesure 9 solidaire à ses extrémités de parois terminales 10a, 10b dont la tranche supérieure 11a, 11b constitue des appuis reposant directement ou indirectement contre la face inférieure 12 du plateau 1 de l'appareil de pesage.

Ce corps d'épreuve 3 comporte encore une poutre d'appui 13 parallèle à la poutre de mesure reliée à cette poutre de mesure par des nervures 14 et aux parois d'extrémités 10a, 10b par des voiles minces 15.

Comme on le verra plus loin, ce corps d'épreuve est intégré dans un pied 2 de telle manière à ce que la pièce d'appui du pied, entrant en contact avec le sol ou une autre surface, soit en appui sous la poutre d'appui 13 par l'intermédiaire d'une bille 16.

Ainsi, comme illustré à la figure 4, lorsqu'on applique une force P sur le plateau 1 une réaction P' est appliquée sous la poutre d'appui 13. Cette force de réaction tend à déformer la poutre de mesure en la déformant vers le haut dans sa partie médiane entre ses appuis 10a, 10b. La face inférieure 17, sur laquelle est fixée une jauge de contrainte 18, ne peut ainsi subir que des efforts de compression et de ce fait il est possible d'utiliser des jauges de contrainte sur substrat de verre fin. La jauge de contrainte 18 peut être de n'importe quel type, mais le corps d'épreuve permet l'utilisation de jauges fragiles en compression.

Le pied 2 comporte une pièce de fixation et de guidage destinée à être fixée sous le plateau 1 par exemple par collage. Cette pièce de fixation et de guidage comporte une plaque de base 19 prenant appui sur la face inférieure du plateau 1 et deux ailes 20, s'étendant substantiellement perpendiculairement à cette plaque de base, ailes dont l'extrémité est munie d'un crochet 21. La distance séparant les crochets 21 correspond à la longueur du corps d'épreuve 3 et la distance entre les crochets 21 et la plaque de base 19 correspond à la hauteur du corps d'épreuve 3.

Ainsi le corps d'épreuve 3 peut être facilement introduit entre les ailes 20 et maintenu en position de service par les crochets 21. Une lame d'acier 22 est prévue dans l'exemple illustré entre les faces d'appui 11a, 11b du corps d'épreuve 3 et la plaque de base 19 de la pièce de fixation et de guidage 19, 20 pour assurer un bon appui du corps d'épreuve 3.

Cette pièce de fixation et de guidage comporte encore deux tiges de guidage 22 s'étendant perpendiculairement à la plaque de base, tiges de guidage 22 sensiblement alignées selon une direction perpendiculaire à un plan lui-même perpendiculaire aux ailes 20 et sensiblement au milieu entre ces ailes. Ces tiges ou guides 22 sont séparés par une distance supérieure à la largeur du corps d'épreuve 3 et s'étendent de part et d'autre de celui-ci lorsqu'il est fixé sur la plaque de base 19 entre les ailes 21.

Le pied comporte encore un socle ou patin 23 destiné à être en contact avec le sol ou une surface d'appui, patin comportant deux colonnes 24 s'étendant sensiblement perpendiculairement à la surface du patin 23. Ces colonnes 24 comportent un taraudage permettant la fixation d'une entretoise 25 à l'aide de vis 26 sur ces colonnes. L'entretoise 25 s'étend au travers du corps d'épreuve 3, transversalement, dans l'espace compris entre la poutre de mesure 9, la poutre d'appui 13 et les nervures 14. Cette entretoise comporte une creusure 27 recevant la bille 16. Cette entretoise 25 comporte encore des perçages 28 à proximité de ses extrémités, perçages recevant les tiges de guidage 22 de la pièce de fixation et de guidage.

Un couvercle 29 entoure la pièce de fixation et de guidage 19, 20 et vient se clipser sur l'extérieur des ailes 20 de cette pièce. Ce couvercle 29 comporte une ouverture inférieure donnant passage au patin 23.

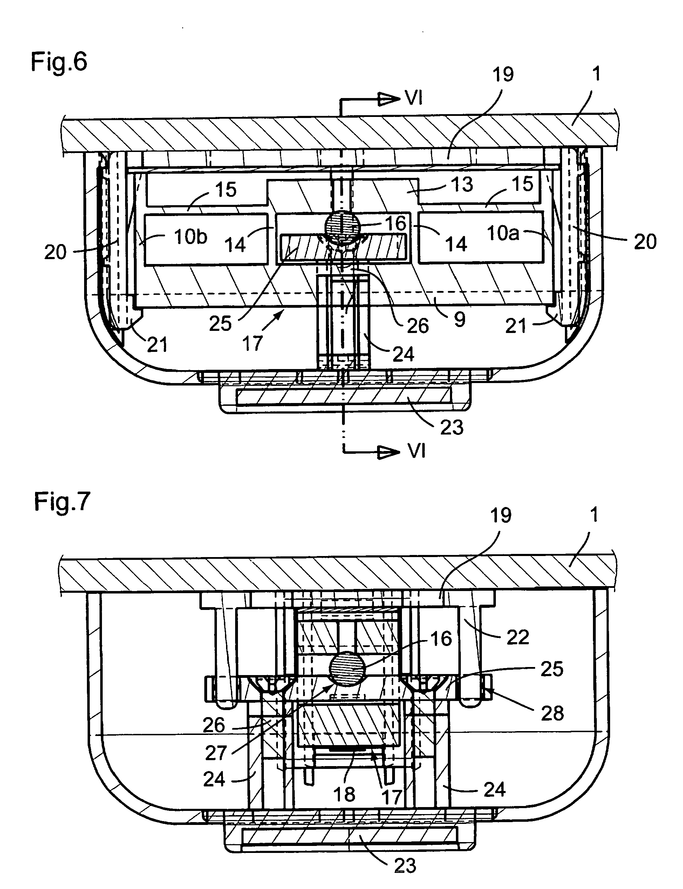

Les résistances 4,5 des jauges de contrainte de chaque pied 2 sont montées en pont de Wheatstone comme illustré à la figure 5. Les quatre résistances de deux pieds formant un pont, on obtient ainsi deux ponts qui sont montés en parallèle. A la sortie du pont complet on obtient un signal de sortie M dont la valeur est proportionnelle au poids placé sur le plateau 1 de l'appareil de pesage. Ce signal de mesure M est traité et sert à commander l'affichage 6. Dans des variantes, l'affichage peut être différent et placé différemment, il peut être séparé de l'appareil de pesage proprement dit, plateau 1 et pieds 2, pour être placé sur un mur ou dans un local de contrôle.

Dans une variante l'appareil pourrait ne comporter que trois pieds assurant sa stabilité même sur un sol inégal. Dans ce cas chaque pied comporterait un ensemble de quatre jauges de contrainte assemblées en pont de Wheatstone.

## Revendications

1. Corps d'épreuve pour appareil de pesage, **caractérisé par le fait qu**'il est constitué d'un tronçon de profilé et comporte une poutre de mesure (9) solidaire à chacune de ses extrémités d'ailes (10a,10b) s'étendant substantiellement perpendiculairement à la poutre de mesure (9) dont les tranches libres (11a,11b) constituent des faces d'appui, et par le fait qu'il comporte encore une poutre d'appui (13) parallèle à la poutre de mesure (9) et reliée à celle-ci par deux nervures (14), cette poutre d'appui (13) étant également reliée à chacune des ailes (10a,10b) par un voile (15) sensiblement parallèle à la poutre de mesure (9).

2. Corps d'épreuve selon la revendication 1, **caractérisé par le fait que** la face libre de la poutre de mesure (9) est munie d'au moins une jauge de contrainte travaillant en compression.

3. Appareil de pesage, **caractérisé par le fait qu**'il comporte un plateau (1) et au moins trois corps d'épreuve selon la revendication 1 prenant appui, directement ou indirectement, par leurtranche d'appui (11a,11b) sur la face inférieure de ce plateau (1) et par le fait qu'il comporte encore des patins (23) montés coulissants perpendiculairement au plateau (1) destinés à reposer sur le sol ou une surface et prenant appui sous la poutre d'appui (13) du corps d'épreuve.

4. Appareil de pesage selon la revendication 3, **caractérisé par le fait qu**'il comporte au moins trois pieds comportant chacun une plaque de base (19) solidaire de la face inférieure du plateau (1) comportant deux pièces de fixation (20) s'étendant perpendiculairement à la plaque de base (19) et se terminant par des crochets (21) destinés à maintenir un corps d'épreuve (3) en position de service en appui sur la plaque de base (19); chaque pied comportant encore un patin (23) solidaire de deux colonnes (24) reliées par une entretoise (25) s'étendant entre la poutre de mesure (9) et la poutre d'appui (13), cette entretoise (25) prenant appui sous la poutre d'appui (13) par l'intermédiaire d'une bille (16).

5. Appareil de pesage selon la revendication 4, **caractérisé par le fait que** chaque pied comporte encore un couvercle (29) disposé sur les pièces de fixation et de guidage (19,20) et donnant passage au patin (23).

6. Appareil de pesage selon la revendication 5, **caractérisé par le fait que** chaque pied comporte encore des tiges de guidage (22) solidaires de la plaque de base (19) coopérant avec des passages (28) pratiqués dans les extrémités de l'entretoise (25).

## Claims

1. Testing member for weighing apparatus, **characterised by** the fact that it is constituted of a piece of sectional iron and comports a measuring girder (9) being at each of its ends solid of flanges (10a, 10b) extending substantially perpendicularly to the measuring girder (9) the free edges (11a, 11b) of which constitute bearing planes, and by the fact that it still comports a bearing girder (13) parallel to the measuring girder (9) and connected to that one by two ribs (14), that bearing girder (13) being also connected to each of the flanges (10a, 10b) by a web (15) appreciably parallel to the measuring girder (9).

2. Testing member according to claim 1, **characterised by** the fact that the free side of the measuring girder (9) is equipped with at least one constraint gauge working by compression.

3. Weighing apparatus, **characterised by** the fact that it comports a scale of balance (1) and at least three testing members according to claim 1 pressing, directly or indirectly, by their bearing edges (11a, 11b) against the lower side of that scale of balance (1), and by the fact that it still comports skids (23) mounted sliding perpendicularly to the scale of balance (1) adapted to rest on the ground or a surface and pressing from below against the bearing girder (13) of the testing member.

4. Weighing apparatus according to claim 3, **characterised by** the fact that it comports at least three feet each comporting a base plate (19) solid of the lower side of the scale of balance (1) comporting two fastening pieces (20) extending perpendicularly to the base plate (19) and terminating by hooks (21) adapted to maintain a testing member (3) in position of service pressing against the base plate (19); each foot still comporting a skid (23) solid of two columns (24) connected by a cross member (25) extending between the measuring girder (9) and the bearing girder (13), that cross member (25) pressing from below against the bearing girder (13) by means of a ball (16).

5. Weighing apparatus according to claim 4, **characterised by** the fact that each foot still comports a cover (29) arranged on the fastening and guiding pieces (19, 20) and giving passageway to the skid (23).

6. Weighing apparatus according to claim 5, **characterised by** the fact that each foot still comports guiding rods (22) solid of the base plate (19) co-operating with passages (28) carried out in the ends of the cross member (25).

## Patentansprüche

1. Biegekraftaufnehmer für Wägevorrichtung, **dadurch gekennzeichnet, dass** er aus einem Profilstück besteht und einen Messbalken (9) umfasst, der an seinen beiden Enden fest mit Flanschen (10a, 10b) verbunden ist, die sich im Wesentlichen senkrecht zum Messbalken (9) erstrecken und deren freie Kanten (11a, 11b) Abstützflächen darstellen, und **dadurch**, dass er weiter einen Stützbalken (13) parallel zum Messbalken (9) umfasst, der durch zwei Rippen (14) mit diesem verbunden ist, wobei dieser Stützbalken (13) über eine zum Messbalken (9) im Wesentlichen parallele Scheibe (15) ebenfalls mit beiden Flanschen (10a, 10b) verbunden ist.

2. Biegekraftaufnehmer nach Anspruch 1, **dadurch gekennzeichnet, dass** die freie Seite des Messbalkens (9) mit zumindest einem kompressiv arbeitenden Dehnungsmessstreifen versehen ist.

3. Wägevorrichtung, **dadurch gekennzeichnet, dass** sie eine Waagschale (1) und zumindest drei Biegekraftaufnehmer nach Anspruch 1 umfasst, die über ihre Abstützkanten (11a, 11b) direkt oder indirekt an der Unterseite dieser Waagschale (1) ruhen, und **dadurch**, dass sie weiter senkrecht zur Waagschale (1) gleitend montierte Kufen (23) umfasst, die dafür bestimmt sind, auf dem Boden oder einer Oberfläche aufzuliegen und sich unter dem Stützbalken (13) des Biegekraftaufnehmers abzustützen.

4. Wägevorrichtung nach Anspruch 3, **dadurch gekennzeichnet**, das sie zumindest drei Füsse umfasst, die je eine fest mit der Unterseite der Waagschale (1) verbundene Bodenplatte (19) mit zwei Befestigungsteilen (20) umfassen, die sich senkrecht zur Bodenplatte (19) erstrecken und in Haken (21) auslaufen, die dafür bestimmt sind, einen Biegekraftaufnehmer (3) in seiner Arbeitsstellung an der Bodenplatte (19) ruhend zu halten; wobei jeder Fuss weiter eine Kufe (23) umfasst, die fest mit zwei Pfosten (24) verbunden ist, die über eine Querstrebe (25) verbunden sind, die sich zwischen dem Messbalken (9) und dem Stützbalken (13) erstreckt und sich über eine Kugel (16) unter dem Stützbalken (13) abstützt.

5. Wägevorrichtung nach Anspruch 4, **dadurch gekennzeichnet, dass** jeder Fuss weiter eine Verkleidung (29) umfasst, die auf den Befestigungs- und Führungsteilen (19, 20) angeordnet ist und die Kufe (23) durchlässt.

6. Wägevorrichtung nach Anspruch 5, **dadurch gekennzeichnet, dass** jeder Fuss weiter Führungsstangen (22) umfasst, die fest mit der Bodenplatte (19) verbunden sind und mit den in die Enden der Querstrebe (25) eingelassenen Durchlässen (28) zusammenwirken.
